(19) Europäisches Patentamt
European Patent Office
Office européen des brevets

(11) **EP 2 450 136 A1**

(12) **EUROPEAN PATENT APPLICATION**
published in accordance with Art. 153(4) EPC

(43) Date of publication:
**09.05.2012  Bulletin 2012/19**

(51) Int Cl.:
**B23B 27/14** (2006.01)    **C22C 1/05** (2006.01)
**C22C 29/08** (2006.01)

(21) Application number: **10794176.7**

(22) Date of filing: **30.06.2010**

(86) International application number:
**PCT/JP2010/061122**

(87) International publication number:
**WO 2011/002008 (06.01.2011 Gazette 2011/01)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **30.06.2009  JP 2009155236**

(71) Applicant: **Tungaloy Corporation
Iwaki-shi
Fukushima 970-1144 (JP)**

(72) Inventors:
• **TAKESAWA, Daisuke**
  **Iwaki-shi, Fukushima 9701144 (JP)**
• **TAMURA, Keitaro**
  **Iwaki-shi, Fukushima 9701144 (JP)**
• **HARA, Hiroki**
  **Iwaki-shi, Fukushima 9701144 (JP)**
• **KITAMURA, Kozo**
  **Iwaki-shi, Fukushima 9701144 (JP)**
• **TANIGUCHI, Yasuro**
  **Iwaki-shi, Fukushima 9701144 (JP)**
• **HAYASHI, Koji**
  **Kuki-shi, Saitama 3460014 (JP)**

(74) Representative: **Vossius & Partner
Siebertstrasse 4
81675 München (DE)**

(54) **CERMET AND COATED CERMET**

(57)    The present invention is to provide a cermet which comprises a first hard phase comprising WC, a second hard phase comprising at least one selected from a carbide, nitride and carbonitride of an element(s) of groups 4, 5 and 6 of the Periodic Table including a titanium element, and a mutual solid solution thereof, and a binder phase mainly comprising an iron-group metal, wherein a carbon amount $C_T$ (% by weight) contained in a whole cermet, a tungsten amount $C_W$ (% by weight) contained in the whole cermet, and a nitrogen amount $C_N$ (% by weight) contained in the whole cermet satisfy $0.25 < (C_N/(C_T - 0.0653 \cdot C_W)) < 6$, the cermet is formed by a surface area having a thickness of 5 to 100 $\mu$m and comprising the first hard phase and the binder phase, and an inner area existing at an inner area than the surface area and comprising the first hard phase, the second hard phase and the binder phase, and a ratio of an area ratio of the first hard phase to an area ratio of the second hard phase at the cross-section structure of the inner area of the cermet is 0.15 to 4.

EP 2 450 136 A1

**Description**

TECHNICAL FIELD

The present invention relates to a cermet and a coated cermet to be used for a cutting tool, etc.

BACKGROUND ART

A cermet has both of suitable toughness and wear resistance, and gives a smooth and beautiful machined surface when a material to be cut is subjected to cutting processing by using the same, so that it has been used as a cutting tool for finishing machining. As a conventional technique concerning the cermet, there is a method for preparing a cermet in which wear resistance is improved by heightening the hardness at the surface area of the cermet (for example, see Patent Literature 1.). Also, there is a cermet in which structures at the inside of the alloy and at the neighbor of the surface are controlled whereby properties are improved (for example, see Patent Literature 2.).

Patent Literature 1: JP Patent No. 2628200B
Patent Literature 2: JP Patent No. 3152105B

DISCLOSURE OF THE INVENTION

PROBLEMS TO BE SOLVED BY THE INVENTION

In recent years, a processing with higher efficiency has been required in the cutting processing. A processing with higher efficiency can be realized by reducing a number of changing times of the cutting tools to new one, so that a cutting tool having a longer tool life than the conventional ones has been required. In the conventional cermets, there is a problem that a tool life is short since they are easily worn and easily fractured. The present invention has been accomplished to solve these problems, and an object thereof is to provide a cermet and a coated cermet which are excellent in wear resistance and fracture resistance than those of the conventional ones.

MEANS TO SOLVE THE PROBLEMS

The present inventors have carried out various investigations to improve fracture resistance of a cermet having excellent wear resistance. The present inventors have found that a surface area having high toughness could be formed on the surface of a cermet having excellent wear resistance by forming a carbonitride phase and a tungsten carbide phase of the cermet with a predetermined ratio and further subjecting to sintering in a nitrogen atmosphere while changing a pressure in a sintering furnace, that the surface area having high toughness formed on the surface of the cermet could improve strength and fracture resistance of the cermet, and that strength at high temperatures and fracture resistance of the cermet could be improved when Cr or V is added to the cermet, whereby they have accomplished the present invention.

That is, the cermet of the present invention is a cermet constituted by a first hard phase comprising WC, a second hard phase comprising at least one of a carbide, nitride and carbonitride of an element(s) of group 4 (Ti, Zr, Hf, etc.), 5 (V, Nb, Ta, etc.) and 6 (Cr, Mo, W, etc.) of the Periodic Table including titanium, and a mutual solid solution (s) thereof, and a binder phase mainly comprising an iron-group metal, wherein a carbon amount $C_T$ (% by weight) contained in a whole cermet, a tungsten amount $C_W$ (% by weight) contained in the whole cermet, and a nitrogen amount $C_N$ (% by weight) contained in the whole cermet satisfy

$$0.25 < (C_N/(C_T - 0.0653 \cdot C_W)) < 6$$

the cermet is formed by a surface area having an average thickness of 5 to 100 $\mu$m and comprising the first hard phase and the binder phase, and an inner area existing at an inner area than the surface area and comprising the first hard phase, the second hard phase and the binder phase, and a ratio of an area ratio of the first hard phase to an area ratio of the second hard phase at the cross-section structure of the inner area of the cermet is 0.15 to 4.

EFFECTS OF THE INVENTION

The cermet of the present invention is excellent in wear resistance and fracture resistance by providing an inner area having excellent wear resistance and toughness as well as a surface area having higher toughness than that of the inner area. A coated cermet in which a hard film is coated on the cermet of the present invention is further excellent in wear resistance.

EMBODIMENTS TO CARRY OUT THE INVENTION

In the cermet of the present invention, a surface area comprising a first hard phase and a binder phase is formed with an average thickness of 5 to 100 $\mu$m from the surface of the cermet to a depth direction. If the average thickness of the surface area is less than 5 $\mu$m, no effect to heighten toughness can be obtained, while if the average thickness of the surface area becomes thicker exceeding 100 $\mu$m, wear resistance is lowered, so that the average thickness of the surface area is set to 5 to 100 $\mu$m. Among these, the average thickness of the surface area is preferably 10 to 50 $\mu$m, and more preferably 20 to 35 $\mu$m. The surface area comprises the first hard phase and the binder phase, and has high toughness.

The first hard phase of the present invention comprises WC. WC has high thermal conductivity, and has a function of difficultly generating thermal crack to the cermet. Moreover, WC easily causes plastic deformation at room temperature, so that an alloy containing WC has high toughness. The second hard phase of the present invention comprises at least one selected from a carbide, nitride and carbonitride of an element(s) of groups 4, 5 and 6 of the Periodic Table including a titanium element, and a mutual solid solution(s) thereof. As the second hard phase, there may be mentioned a carbonitride of Ti and a carbonitride of an element(s) in which Ti and at least one selected from the group consisting of W, Ta, Nb, Mo, V, Cr, Zr and Hf are used in combination, and, there may be specifically mentioned, for example, Ti(C,N), (Ti,W)-(C,N), (Ti,W,Ta)(C,N), (Ti,W,Nb)(C,N), (Ti,W,Ta,Nb)(C,N), (Ti,W,Nb,Mo,V)(C,N), (Ti,W,Cr, V)(C,N), (Ti,W,Nb,Cr,V)(C,N), (Ti,W,Ta,Nb,Cr,V)(C,N), (Ti,W,Nb,Cr,Zr)-(C,N), (Ti,W,Cr)(C,N), (Ti,W,Nb,Cr,Hf)(C,N), (Ti, W,Ta,Cr)(C,N), (Ti,W,Ta,Nb,Cr)-(C,N), etc. The second hard phase has an effect of improving wear resistance of the cermet. A structure of the second hard phase may be mentioned, for example, a single phase comprising carbonitride such as Ti(C,N), (Ti,W)(C,N), (Ti,W,Ta)(C,N), (Ti,W,Nb)(C,N), (Ti,W,Ta,Nb)(C,N), (Ti,W,Nb,Mo,V)(C,N), (Ti,W,Cr,V)(C, N), (Ti,W,Nb,Cr,V)(C,N), (Ti,W,Ta,Nb,Cr,V)(C,N), (Ti,W,Nb,Cr,Zr)(C,N), (Ti,W,Cr)-(C,N), (Ti,W,Nb,Cr,Hf)(C,N), (Ti,W, Ta,Cr)(C,N), (Ti,W,Ta,Nb,Cr)(C,N), etc., a core-rim phase having a structure in which a core portion (core) comprising carbonitride such as Ti(C,N), (Ti,W)(C,N), (Ti,W,Ta)(C,N), (Ti,W,Nb)(C,N), (Ti,W,Ta,Nb)(C,N), (Ti,W,Nb,Mo,V)(C,N), (Ti,W,Cr,V)(C,N), (Ti,W,Nb,Cr,V)(C,N), (Ti,W,Ta,Nb,Cr,V)-(C,N), (Ti,W,Nb,Cr,Zr)(C,N), (Ti,W,Cr)(C,N), (Ti,W,Nb,Cr,Hf) (C,N), (Ti,W,Ta,Cr)-(C,N), (Ti,W,Ta,Nb,Cr)(C,N), etc., is surrounded by a peripheral portion (rim) comprising a carbonitride which is different from the composition of the core portion (core), such as (Ti,W)(C,N), (Ti,W,Ta)(C,N), (Ti,W,Nb) (C,N), (Ti,W,Ta,Nb)(C,N), (Ti,W,Nb,Mo,V)(C,N), (Ti,W,Cr,V)(C,N), (Ti,W,Nb,Cr,V)(C,N), (Ti,W,Ta,Nb,Cr,V)-(C,N), (Ti, W,Nb,Cr,Zr)(C,N), (Ti,W,Cr)(C,N), (Ti,W,Nb,Cr,Hf)(C,N), (Ti,W,Ta,Cr)-(C,N), (Ti,W,Ta,Nb,Cr)(C,N), etc.

It is difficult to directly measure a carbon amount and a nitrogen amount contained in the second hard phase of the cermet according to the present invention, so that by measuring a carbon amount $C_T$ (% by weight) contained in the whole cermet and a tungsten amount $C_W$ (% by weight) contained in the whole cermet, one of the characteristic features of the cermet of the present invention is defined by a ratio ($C_N/C_C$) of a nitrogen amount $C_N$ (% by weight) contained in the whole cermet to $C_C$ (% by weight) which is obtained by the calculation formula:

$$C_C = C_T - 0.0653 \cdot C_W.$$

Here, $C_C$ is an amount deemed to be a carbon amount of the second hard phase as explained in detail below, and 0.0653 is a coefficient to obtain the carbon amount contained in WC.

When the above is explained in detail, a carbon amount dissolved in the binder phase of the cermet is extremely little, and almost all parts of the carbon contained in the whole cermet are contained in the first hard phase and the second hard phase. W contained in the whole cermet is contained in the first hard phase and the second hard phase, and the W amount contained in the first hard phase is large, whereas the W amount contained in the second hard phase is extremely little. Thus, (1) W contained in the whole cermet is deemed to form the first hard phase (WC), and (2) the value in which the carbon amount of WC deduced from the carbon amount of the whole cermet is deemed to be a carbon amount of the second hard phase. Specifically, (1) WC is constituted by W having an atomic number of 183.85 and C (carbon) having an atomic number of 12.01, so that a weight ratio of C contained in WC is 0.0613, and a weight ratio of W contained in WC is 0.9387. When a tungsten amount in the whole cermet is defined to be $C_W$ (% by weight), then, the carbon amount contained in WC can be obtained from (0.0613/0.9387)$\cdot C_W$, i.e., (0.0653$\cdot C_W$). (2) When a carbon

amount ($0.0653 \cdot C_W$) contained in WC is deduced from a carbon amount $C_T$ (% by weight) in the whole cermet, a carbon amount contained in the binder phase and the second hard phase can be obtained. A carbon amount dissolved in the binder phase is extremely little as compared to a carbon amount contained in the second hard phase, so that a carbon amount $C_C$ (% by weight) in the second hard phase can be deemed to be ($C_T$ - $0.0653 \cdot C_W$).

On the other hand, nitrogen does not dissolve in WC of the first hard phase. An amount of nitrogen dissolved in the binder phase is extremely little as compared with a nitrogen amount contained in the second hard phase. Almost all of nitrogen is contained in the second hard phase. Thus, a nitrogen amount in the whole cermet can be deemed to be in proportion with the nitrogen amount in the second hard phase. When a ($C_N/C_C$) ratio is obtained from the above-mentioned $C_C$ (% by weight) and $C_N$ (% by weight), the cermet of the present invention satisfies $0.25 < (C_N/C_C) < 6$. If the ($C_N/C_C$) ratio becomes 0.25 or less, the surface area is difficultly generated, while the ($C_N/C_C$) ratio is 6 or more, sinterability is lowered to cause pore(s) whereby fracture resistance is lowered. The above-mentioned range is more preferably $0.28 < (C_N/C_C) < 5$, further preferably $0.3 < (C_N/C_C) < 4.6$. To satisfy the carbon amount $C_C$ (% by weight) and the nitrogen amount $C_N$ (% by weight) contained in the second hard phase in the above-mentioned range, it can be specifically accomplished by regulating the carbon amount and the nitrogen amount of the starting powders for the second hard phase in the starting powder composition. More specifically, it can be accomplished by setting a weight ratio of the nitrogen amount and the carbon amount of the starting powders for the second hard phase in the starting powder composition to 1:4 to 9:1, preferably 1:3.57 to 5:1, more preferably 1:3.33 to 4.6:1.

The carbon amount $C_T$ (% by weight) of the whole cermet can be measured by the infrared absorption method after combustion in a furnace with preheating or peak separating. The nitrogen amount $C_N$ (% by weight) of the whole cermet can be measured by the thermal conductimetric method after fusion in a current of inert gas. The tungsten amount $C_W$ (% by weight) of the whole cermet can be measured by an X-ray fluorescence spectrometer.

An area % of each phase in the cross-section structure of an alloy each corresponds to % by volume of each phase. It is preferred that in the cross-section structure of the inner area of the cermet according to the present invention, an area ratio of the binder phase is 3 to 30 area %, a sum of an area ratio of the first hard phase and an area ratio of the second hard phase is 70 to 97 area %, and a sum of the above is 100 area %. The reason is that if the binder phase is less than 3 area %, and the sum of the first hard phase and the second hard phase is large exceeding 97 area %, toughness of the cermet is lowered, while if the binder phase is large exceeding 30 area %, and the sum of the first hard phase and the second hard phase is less than 70 area %, wear resistance of the cermet is lowered. The area ratio in the cross-section structure of the inner area of the cermet according to the present invention is more preferably the area ratio of the binder phase of 4 to 25 area %, and the sum of the area ratio of the first hard phase and the area ratio of the second hard phase of 75 to 96 area %, further preferably the area ratio of the binder phase of 5 to 20 area %, and the sum of the area ratio of the first hard phase and the area ratio of the second hard phase of 80 to 95 area %. The inner area of the cermet of the present invention means an area other than the surface area. To make the inner area of the cermet of the present invention in the above-mentioned area ratio, it can be accomplished by sintering the material at a temperature which can make it densified.

In the cross-section structure at the surface area of the cermet according to the present invention, it is preferred that an area ratio of the binder phase is 3 to 30 area %, an area ratio of the first hard phase is 70 to 97 area %, and a sum of these is 100 area %. The reason is that if the binder phase is less than 3 area %, and, the first hard phase is large exceeding 97 area %, toughness of the cermet is lowered, while if the binder phase is large more than 30 area %, and, the first hard phase is less than 70 area %, wear resistance of the cermet is lowered. It is preferred that the second hard phase is substituted for the first hard phase of the surface area, and it is contained in the surface area in an amount of 0.1 to 10 area % of the cross-section structure at the surface area, since wear resistance is improved without lowering toughness. It is also preferred that an area ratio of the binder phase at the inner area and an area ratio of the binder phase at the surface area are substantially the same ratio. An area ratio of the cross-section structure at the surface area of the cermet according to the present invention is more preferably that the area ratio of the binder phase is 4 to 25 area % and the area ratio of the first hard phase is 75 to 96 area %, further preferably that the area ratio of the binder phase is 5 to 20 area % and the area ratio of the first hard phase is 80 to 95 area %.

The surface area of the cermet of the present invention means an area with an average thickness of 5 to 100 $\mu$m from the surface of the cermet to the depth direction. To make the surface area of the cermet according to the present invention in the above-mentioned area ratio, it can be accomplished by making the surface areas low nitrogen state during the sintering.

When a ratio of an area % of the first hard phase to an area % of the second hard phase in the cross-section structure of the inner area of the cermet according to the present invention is 0.15 or more, toughness is improved, and the ratio of the area % of the first hard phase to the area % of the second hard phase exceeds 4, wear resistance is lowered, so that the ratio of the area % of the first hard phase to the area % of the second hard phase is set to 0.15 to 4. The ratio of the area % of the first hard phase to the area % of the second hard phase in the cross-section structure of the inner area of the cermet according to the present invention is more preferably 0.20 to 3.8, and further preferably 0.25 to 3.5. In the present invention, to make the ratio of the area % of the first hard phase to the area % of the second hard phase in the above-mentioned range, it can be accomplished by sintering the material under the condition of causing no denitrification.

When a Cr element is added to the cermet of the present invention so that a $Cr_3C_2$ amount becomes 0.1 to 10% by weight based on the weight of the whole cermet as 100% by weight wherein the Cr element contained in the whole cermet of the present invention is converted into a carbide (at this time, the Cr element is converted into $Cr_3C_2$.), high temperature strength of the cermet, in particular, high temperature strength at the surface area is improved. If the $Cr_3C_2$ amount is less than 0.1% by weight when the Cr element is converted into a carbide, the effect cannot be obtained, while if it becomes large exceeding 10% by weight, toughness is lowered whereby fracture resistance is lowered. Thus, it is preferred that the Cr element is added to the cermet of the present invention so that the $Cr_3C_2$ amount becomes 0.1 to 10% by weight wherein the Cr element is converted into a carbide. The $Cr_3C_2$ amount is more preferably 0.15 to 8% by weight, and further preferably 0.2 to 6% by weight. In the present invention, to make the $Cr_3C_2$ amount in the above-mentioned range, it can be accomplished by adding $Cr_3C_2$ with a predetermined ratio at the time of formulating raw materials.

When a V element is added to the cermet of the present invention so that a VC amount becomes 0.1 to 5% by weight based on the weight of the whole cermet as 100% by weight wherein the V element contained in the whole cermet of the present invention is converted into a carbide (at this time, the V element is converted into VC.), grain growth of WC is controlled so that the structure becomes uniform and fracture resistance is improved. If the VC amount is less than 0.1 % by weight, the effect of making the structure uniform and the effect of improving fracture resistance cannot sufficiently be obtained, while if it becomes large exceeding 5% by weight, toughness is lowered so that fracture resistance is lowered. Thus, it is preferred that the V element is added to the cermet of the present invention so that the VC amount converted into a carbide is 0.1 to 5% by weight. The VC amount is more preferably 0.2 to 4% by weight, and further preferably 0.3 to 3% by weight. In the present invention, to make the VC amount in the above-mentioned range, it can be accomplished by adding VC with a predetermined ratio at the time of formulating raw materials.

The binder phase of the present invention has an effect of heightening strength of the cermet by firmly bonding the first hard phase and the second hard phase. The binder phase comprising an iron-group metal(s) as a main component in the present invention means an iron-group metal(s), or a material in which at least one of an element(s) of groups 4, 5 and 6 of the Periodic Table, Si, Al, Zn, Cu, Ru, Rh and Re is dissolved in the iron-group metal(s) in an amount of less than 50% by weight based on the weight of the whole binder phase as 100% by weight. In the present invention, the iron-group metal(s) means Co, Ni and Fe. Among these, it is more preferred that the binder phase comprises one or two kinds of Co and Ni since mechanical strength is improved, and among these, it is further preferred that the binder phase comprises Co since adhesiveness of the cermet and the hard film is improved. For the purpose of dissolving the hard phase components into the binder phase or improving characteristics of the binder phase, it is preferred that an element(s) of groups 4, 5 and 6 of the Periodic Table is dissolved in the iron-group metal(s) of the binder phase in an amount of less than 50% by weight based on the weight of the whole binder phase as 100% by weight. It is preferred that Si, Al, Zn and/or Cu is/are contained in the iron-group metal(s) of the binder phase in an amount of less than 50% by weight based on the weight of the whole binder phase as 100% by weight, since sinterability is improved. It is also preferred that Ru, Rh and/or Re is/are contained in the iron-group metal(s) of the binder phase in an amount of 30% by weight or less based on the weight of the whole binder phase as 100% by weight, since wear resistance is improved. In the present invention, to make amounts of each component in the above-mentioned range, it can be accomplished by adding each component with a predetermined ratio at the time of formulating raw materials.

A coated cermet on the surface of the cermet of the present invention is coated a hard film such as an oxide, carbide or nitride of an element(s) of groups 4, 5 and 6 of the Periodic Table, Al and Si, and mutual solid solution(s) thereof, a hard carbon film, etc., by the CVD method or PVD method is excellent in wear resistance. Specific examples of the hard film may be mentioned TiN, TiC, TiCN, TiAlN, TiSiN, AlCrN, $Al_2O_3$, diamond, diamond-like carbon (DLC), etc. An average total film thickness of the hard film is preferably 0.1 to 30 $\mu$m, since if it is 0.1 $\mu$m or more, wear resistance is improved, while if it becomes thick exceeding 30 $\mu$m, fracture resistance is lowered. The average total film thickness of the hard film is more preferably 1 to 20 $\mu$m, and further preferably 2.5 to 15 $\mu$m. The average total film thickness of the hard film can be made thick by elongating a coating treatment time.

The cermet of the present invention can be obtained by a preparation method of a cermet which comprises, for example, mixing TiCN powder, WC powder, powder(s) of a carbide, nitride and carbonitride of an element(s) of groups 4, 5 and 6 of the Periodic Table and a mutual solid solution(s) thereof, and powder of an iron-group metal(s) with a predetermined formulation composition, and the mixture is subjected to:

(A) a step of raising the temperature in a non-oxidative atmosphere from normal temperature to First heating temperature of 1200 to 1400°C,
(B) a step of raising the temperature from First heating temperature of 1200 to 1400°C to Second heating temperature of 1420 to 1600°C in a nitrogen atmosphere at a pressure of 10 Torr or higher,
(C) a step of maintaining at Second heating temperature of 1420 to 1600°C in a nitrogen atmosphere at a pressure of 10 Torr or higher,
(D) a step of maintaining at Second heating temperature of 1420 to 1600°C in a nitrogen atmosphere at a pressure lower than that of Step (C), and
(E) a step of cooling from Second heating temperature of 1420 to 1600°C to a normal temperature in a nitrogen atmosphere at a pressure lower than that of Step (D).

In Step (A), a temperature of the mixture is elevated in a non-oxidative atmosphere whereby oxidation of the mixture is prevented. The non-oxidative atmosphere may be specifically mentioned in vacuum, nitrogen atmosphere, inert gas atmosphere, hydrogen atmosphere, etc. A pressure of the nitrogen atmosphere in Steps (B) and (C) is preferably 10 Torr or higher. If the pressure of the nitrogen atmosphere becomes high exceeding 100 Torr, sinterability of the cermet is lowered so that the pressure of the nitrogen atmosphere is preferably 10 to 100 Torr.

Specific preparation method of the cermet of the present invention is mentioned as follows. TiCN powder, WC powder, powders of a carbide, nitride, carbonitride of element(s) of groups 4, 5 and 6 of the Periodic Table and mutual solid solution(s) thereof, and powder of an iron-group metal are prepared. These powders are commercially available or prepared by high-temperature solution heat treatment, and their average particle size, etc., are not particularly limited, but they preferably have an average particle size measured by, for example, Fisher method (Fisher Sub-Sieve Sizer (FSSS)) described in American Society for Testing and Materials (ASTM) Standard B330 of 0.1 to 10 $\mu$m, and further preferably 0.5 to 8 $\mu$m. These powders are weighed with a predetermined weight ratio, mixed by a wet ball mill with a solvent(s), and the mixture was dried by evaporating the solvent after mixing. A wax for molding such as paraffin, etc., is added to the obtained mixture to mold the mixture to a predetermined shape. The molding method may be mentioned a press molding, extrusion molding, injection molding, etc. The molded mixture is placed in a sintering furnace, a temperature thereof is raised in vacuum to 350 to 450°C to remove the wax, and then, in vacuum or in a nitrogen atmosphere, the temperature is raised from 450°C to First heating temperature of 1200 to 1400°C, preferably to 1200 to 1350°C. The temperature heating rate is not particularly limited, and is preferably 1 to 20°C/min. Further, the temperature of the mixture is raised from First heating temperature of 1200 to 1400°C to Second heating temperature of 1420 to 1600°C, preferably 1450 to 1550°C in a nitrogen atmosphere with a pressure of 10 Torr or higher, preferably 10 to 300 Torr, and the mixture is maintained at Second heating temperature of 1420 to 1600°C for 10 to 60 minutes, preferably for 20 to 50 minutes in the nitrogen atmosphere. The temperature heating rate at this time is also not particularly limited, and preferably 0.5 to 15°C/min. Thereafter, the mixture is maintained in the nitrogen atmosphere with a pressure lower than that of the previous step, preferably at 3 to 60 Torr for 10 to 60 minutes, preferably 20 to 50 minutes, and cooled from Second heating temperature of 1420 to 1600°C to a normal temperature in the nitrogen atmosphere with a pressure which is lower than the previous step. The cooling rate is not particularly limited, and preferably 0.1 to 100°C/min.

A coated cermet of the present invention can be obtained by coating a hard film on the surface of the cermet of the present invention by the conventional CVD method or PVD method.

The cermet and coated cermet of the present invention are excellent in wear resistance and fracture resistance, so that when they are used as a cutting tool, they show excellent cutting properties. Therefore, when the cermet and coated cermet of the present invention are used as a cutting tool, tool life can be more improved than that of the conventional ones.

EXAMPLES

Example 1

As starting powder of the cermet, Ti(C$_{0.7}$N$_{0.3}$) powder having an average particle size of 1.5 $\mu$m, Ti(C$_{0.5}$N$_{0.5}$) powder having an average particle size of 1.4 $\mu$m, Ti(C$_{0.3}$N$_{0.7}$) powder having an average particle size of 1.5 $\mu$m, TiN powder having an average particle size of 1.5 $\mu$m, (Ti$_{0.92}$Nb$_{0.03}$W$_{0.05}$)(C$_{0.5}$N$_{0.5}$) powder having an average particle size of 1.7 $\mu$m, (Ti$_{0.89}$Nb$_{0.03}$Ta$_{0.03}$W$_{0.05}$)(C$_{0.5}$N$_{0.5}$) powder having an average particle size of 1.6 $\mu$m, (Ti$_{0.8}$Nb$_{0.1}$W$_{0.1}$)(C$_{0.5}$N$_{0.5}$) powder having an average particle size of 1.5 $\mu$m, TiC powder having an average particle size of 1.5 $\mu$m, TaC powder having an average particle size of 1.5 $\mu$m, NbC powder having an average particle size of 1.5 $\mu$m, ZrC powder having an average particle size of 1.5 $\mu$m, WC powder having an average particle size of 1.5 $\mu$m, Mo$_2$C powder having an average particle size of 1.6 $\mu$m, Cr$_3$C$_2$ powder having an average particle size of 1.1 $\mu$m, VC powder having an average particle size of 1.0 $\mu$m, Co powder having an average particle size of 1.3 $\mu$m, and Ni powder having an average particle size of 1.6 $\mu$m were prepared. By using these powders, they were weighed with the formulation compositions shown in Table 1.

[Table 1]

| Sample No. | Formulation composition (% by weight) |
|---|---|
| Present product 1 | 12.4%Ti$(C_{0.7}N_{0.3})$-70.5%WC-7.0%NbC-1.6%Mo$_2$C-0.5%VC-8.0%Co |
| Present product 2 | 25.8%Ti$(C_{0.5}N_{0.5})$-64.1%WC-0.7%Cr$_3$C$_2$-0.3%VC-9.1%Co |
| Present product 3 | 25.7%$(Ti_{0.92}Nb_{0.03}W_{0.05})(C_{0.5}N_{0.5})$-61.5%WC-2.0%Cr$_3$C$_2$-0.3%VC-10.5%Co |
| Present product 4 | 27.1%Ti$(C_{0.5}N_{0.5})$-51.4%WC-4.8%TaC-2.6%NbC-3.7%Cr$_3$C$_2$-0.6%VC-6.8%Co-3.0%Ni |
| Present product 5 | 26.3%$(Ti_{0.89}Nb_{0.03}Ta_{0.03}W_{0.05})(C_{0.5}N_{0.5})$-61.0%WC-2.0%Cr$_3$C$_2$-0.3%VC-10.4%Co |
| Present product 6 | 23.0%Ti$(C_{0.3}N_{0.7})$-62.6%WC-0.7%Cr$_3$C$_2$-0.3%VC-13.4%Co |
| Present product 7 | 28.8%Ti$(C_{0.5}N_{0.5})$-52.6%WC-4.4%NbC-3.8%Cr$_3$C$_2$-0.4%ZrC-10.0%Co |
| Present product 8 | 17.0%Ti$(C_{0.3}N_{0.7})$-9.3%TiN-63.8%WC-0.7%Cr$_3$C$_2$-9.2%Co |
| Comparative product 1 | 83.3%$(Ti_{0.8}Nb_{0.1}W_{0.1})(C_{0.5}N_{0.5})$-16.7%Co |
| Comparative product 2 | 30.9%TiC-51.8%WC-4.8%TaC-2.6%NbC-9.9%Co |
| Comparative product 3 | 4.9%Ti$(C_{0.5}N_{0.5})$-79.0%WC-3.4%TaC-1.8%NbC-2.6%Cr$_3$C$_2$-8.3%Co |
| Comparative product 4 | 54.7%Ti$(C_{0.5}N_{0.5})$-22.9%WC-6.8%NbC-7.8%Co-7.8%Ni |
| Comparative product 5 | 20.5%Ti$(C_{0.3}N_{0.7})$-24.6%TiN-39.8%WC-15.1%Co |

Weighed mixed powders were mixed and pulverized by a wet ball milling, and then, the solvent was evaporated to dry the mixture. Paraffin was added to the dried mixture and the resulting material was press molded. Here, with regard to Present products 1 to 8, press molded mixtures were each placed in a sintering furnace, the temperature thereof was gradually raised from the normal temperature to 450°C in vacuum to evaporate the paraffin, and then, the temperature was raised from 450°C to First heating temperature of 1220°C in vacuum with a temperature heating rate of 10 to 12°C/min. Further, the mixture was heated from First heating temperature of 1220°C to Second heating temperature of 1540°C in a nitrogen atmosphere with a pressure of 50 Torr and a temperature heating rate of 2.0°C/min. It was maintained at Second heating temperature of 1540°C for 30 minutes in a nitrogen atmosphere with a pressure of 50 Torr, further maintained at the same temperature in a nitrogen atmosphere with a pressure of 20 Torr for 30 minutes, and then, cooled from Second heating temperature of 1540°C to the normal temperature with a cooling rate of 10°C/min while gradually lowering the pressure of the nitrogen atmosphere from 20 Torr. On the other hand, with regard to Comparative products 1 to 5, press molded mixtures were each placed in a sintering furnace, the temperature thereof was gradually raised from the normal temperature to 450°C in vacuum to evaporate the paraffin, and then, the temperature was raised from 450°C to 1280°C with a temperature heating rate of 10°C/min in vacuum. Further, temperatures of the materials were raised from 1280°C to 1540°C with a temperature heating rate of 5°C/min in vacuum, and the materials were maintained at 1540°C for 50 minutes in vacuum. Thereafter, the materials were cooled from 1540°C to the normal temperature with a cooling rate of 100°C/min in vacuum.

Cross-section structures at the surface area and the inner area of the obtained cermets were observed by a scanning type electron microscope, and each composition of the binder phase, the first hard phase and the second hard phase, a Cr amount and a V amount were measured by using an EDS attached to the scanning type electron microscope. The Cr amount (% by weight) was converted into Cr$_3$C$_2$ (% by weight), and the V amount (% by weight) was converted into VC (% by weight). The Cr$_3$C$_2$ amount and the VC amount each show the same values at the surface area and the inner area, so that they were made each amount contained in the whole cermet. These results were shown in Table 2. Among the elements contained in the binder phase, the element which is 50% by weight or more based on the whole binder phase is made a main component, and the element which is less than 50% by weight based on the whole binder phase is made a minor component. Also, when two or more kinds of iron-group elements are contained in the binder phase, if the sum of the iron-group elements is 50% by weight or more based on the whole binder phase, then the iron-group elements are made a main component.

[Table 2]

| Sample No. | Composition of each phase at surface area | | | Composition of each phase at inner area | | | | Amount contained in whole cermet | |
|---|---|---|---|---|---|---|---|---|---|
| | Binder phase | | First hard phase | Binder phase | | First hard phase | Second hard phase | Cr$_3$C$_2$ (wt%) | VC (wt%) |
| | Main component | Minor component | | Main component | Minor component | | | | |
| Present product 1 | Co | Ti,W,Mo | WC | Co | Ti,W,Mo | WC | Single phase of Ti(C,N), single phase of (Ti,W,Nb, Mo,V)(C,N), core-rim phase of Ti(C, N) core-(Ti,W, Nb,Mo,V)(C, N) rim | - | 0.4 |
| Present product 2 | Co | Ti,W,Cr | WC | Co | Ti,W,Cr | WC | Single phase of Ti(C,N), single phase of (Ti,W,Cr,V) (C,N), core-rim phase of Ti (C,N) core-(Ti,W, Cr,V)-(C,N) rim | 0.3 | 0.2 |

(continued)

| Sample No. | Composition of each phase at surface area | | | Composition of each phase at inner area | | | | Amount contained in whole cermet | |
|---|---|---|---|---|---|---|---|---|---|
| | Binder phase | | First hard phase | Binder phase | | First hard phase | Second hard phase | Cr$_3$C$_2$ (wt%) | VC (wt%) |
| | Main component | Minor component | | Main component | Minor component | | | | |
| Present product 3 | Co | Ti,W,Cr | WC | Co | Ti,W,Cr | WC | Single phase of (Ti,Nb,W)(C,N), single phase of (Ti,W,Nb,Cr,V)(C,N), core-rim phase of (Ti,Nb,W)(C,N) core-(Ti,W,Nb,Cr,V)(C,N) rim | 1.6 | 0.2 |
| Present product 4 | Co+Ni | Ti,W,Cr | WC | Co+Ni | Ti,W,Cr | WC | Single phase of Ti(C,N), single phase of (Ti,W,Ta,Nb,Cr,V)(C,N), core-rim phase of Ti(C,N) core-core-rim phase of Ti(C,N) core-(Ti,W,Ta,Nb,Cr,V)(C,N) rim | 3.3 | 0.5 |

| Sample No. | Composition of each phase at surface area | | | Composition of each phase at inner area | | | | Amount contained in whole cermet | |
|---|---|---|---|---|---|---|---|---|---|
| | Binder phase | | First hard phase | Binder phase | | First hard phase | Second hard phase | $Cr_3C_2$ (wt%) | VC (wt%) |
| | Main component | Minor component | | Main component | Minor component | | | | |
| Present product 5 | Co | Ti,W,Cr | WC | Co | Ti,W,Cr | WC | Single phase of (Ti,Nb,Ta, W)(C,N), single phase of(Ti,W,Ta, Nb,Cr,V)(C, N), core-rim phase of (Ti, Nb,Ta,W)(C, N) core-(Ti,W, Ta,Nb,Cr,V) (C,N) rim | 1.6 | 0.3 |
| Present product 6 | Co | Ti,W,Cr | WC | Co | Ti,W,Cr | WC | Single phase of Ti(C,N), single phase of (Ti,W,Cr,V) (C,N), core-rim phase of Ti (C,N) core-(Ti,W, Cr,V)-(C,N) rim | 0.4 | 0.2 |

| Sample No. | Composition of each phase at surface area | | | Composition of each phase at inner area | | | | Amount contained in whole cermet | |
|---|---|---|---|---|---|---|---|---|---|
| | Binder phase | | First hard phase | Binder phase | | First hard phase | Second hard phase | $Cr_3C_2$ (wt%) | VC (wt%) |
| | Main component | Minor component | | Main component | Minor component | | | | |
| Present product 7 | Co | Ti,W,Cr | WC | Co | Ti,W,Cr | WC | Single phase of Ti(C,N), single phase of (Ti,W,Nb, Cr,Zr)(C,N), core-rim phase of Ti(C, N) core-(Ti,W, Nb,-Cr,Zr)(C, N) rim | 3.4 | - |
| Present product 8 | Co | Ti,W,Cr | WC | Co | Ti,W,Cr | WC | Single phase of Ti(C,N), single phase of (Ti,W,Cr) (C,N), core-rim phase of Ti (C,N) core-(Ti,W, Cr)-(C,N) rim | 0.4 | - |
| Comparative product 1 | - | - | - | Co | Ti,W | - | Single phase of (Ti,W,Nb) (C,N) | - | - |
| Comparative product 2 | - | - | - | Co | Ti,W | WC | Single phase of (Ti,W,Ta, Nb)C | - | - |

EP 2 450 136 A1

(continued)

| Sample No. | Composition of each phase at surface area | | | Composition of each phase at inner area | | | | Amount contained in whole cermet | |
| --- | --- | --- | --- | --- | --- | --- | --- | --- | --- |
| | Binder phase | | First hard phase | Binder phase | | First hard phase | Second hard phase | $Cr_3C_2$ (wt%) | VC (wt%) |
| | Main component | Minor component | | Main component | Minor component | | | | |
| Comparative product 3 | Co | Ti,W,Cr | WC | Co | Ti,W,Cr | WC | Single phase of Ti(C,N), single phase of (Ti,W,Ta, Nb,Cr)(C,N), core-rim phase of Ti(C, N) core-(Ti,W, Ta,Nb,Cr)(C, N) rim | 2.3 | - |
| Comparative product 4 | - | - | - | Co+Ni | Ti,W | - | Single phase of Ti(C,N), single phase of (Ti,W,Nb) (C,N), core-rim phase of Ti (C,N) core-(Ti,W, Nb)-(C,N) rim | - | - |
| Comparative product 5 | Co | Ti,W | WC | Co | Ti, | W WC | Single phase of Ti(C,N), single phase of (Ti,W)(C, N), core-rim phase of Ti(C, N) core-(TI, W)(C,N) rim | - | - |

An average thickness of the surface area was measured from the cross-section structure of the cermet by using a scanning type electron microscope. From the photographs in which a cross-section structure at the surface area and the inner area of the cermet was photographed by using the scanning type electron microscope, an area ratio $S_b$ of the binder phase, an area ratio $S_1$ of the first hard phase, and an area ratio $S_2$ of the second hard phase at the surface area and the inner area were measured. Also, a $S_1/S_2$ ratio was obtained from $S_1$ and $S_2$. These values were shown in Table 3. In Comparative product 5, many numbers of pores are present due to lowering in sinterability so that the sum of the area ratios $S_b$, $S_1$ and $S_2$ was not 100 area %.

[Table 3]

| Sample No. | Surface area | | | Inner area | | | | $C_N/(C_T-0.0653 \cdot C_W)$ |
|---|---|---|---|---|---|---|---|---|
| | Average thickness ($\mu$m) | $S_b$ (Area %) | $S_1$ (Area %) | $S_b$ (Area %) | $S_1$ (Area %) | $S_2$ (Area %) | $S_1/S_2$ | |
| Present product 1 | 25 | 12.8 | 87.2 | 11.9 | 48.9 | 39.2 | 1.25 | 0.30 |
| Present product 2 | 30 | 12.2 | 87.8 | 12.0 | 38.1 | 49.9 | 0.76 | 1.05 |
| Present product 3 | 35 | 15.7 | 84.3 | 14.3 | 38.0 | 47.7 | 0.80 | 1.02 |
| Present product 4 | 20 | 11.8 | 88.2 | 12.1 | 27.3 | 60.6 | 0.45 | 0.77 |
| Present product 5 | 35 | 15.9 | 84.1 | 14.5 | 37.8 | 47.7 | 0.79 | 1.02 |
| Present product 6 | 35 | 19.6 | 0.4 | 17.8 | 37.6 | 44.6 | 0.84 | 2.35 |
| Present product 7 | 20 | 12.0 | 88.0 | 12.2 | 27.4 | 60.4 | 0.45 | 0.81 |
| Present product 8 | 30 | 11.3 | 88.7 | 10.2 | 39.5 | 50.3 | 0.79 | 4.27 |
| Comparative product 1 | 0 | - | - | 15.7 | 0 | 84.3 | 0 | 0.94 |
| Comparative product 2 | 0 | - | - | 11.9 | 9.9 | 78.2 | 0.13 | 0 |
| Comparative product 3 | 20 | 16.0 | 84.0 | 14.3 | 61.4 | 24.3 | 2.53 | 0.36 |
| Comparative product 4 | 0 | - | - | 14.5 | 0 | 85.5 | 0 | 0.81 |
| Comparative product 5 | 10 | 13.4 | 85.6 | 12.7 | 19.5 | 66.6 | 0.29 | 7.11 |

The nitrogen amount $C_N$ (% by weight) of the whole cermet was measured by the inert gas fusion-thermal conductivity method. The carbon amount $C_T$ (% by weight) of the whole cermet was measured by the high frequency furnace combustion-infrared absorption method. The tungsten amount $C_W$ (% by weight) of the whole cermet was measured by an X-ray fluorescence spectrometer. From these values, $C_N/(C_T-0.0653 \cdot C_W)$ was calculated, and the results were also shown in Table 3.

To the cermet were applied grinding and honing, whereby it was machined to an ISO standard TNMG160408 shape. Moreover, a hard film having a film constitution of (substrate side) TiN with an average film thickness of 1.0 $\mu$m-Ti(C,N) with an average film thickness of 8.0 $\mu$m-Ti (C,N,O) with an average film thickness of 0.5 $\mu$m-$Al_2O_3$ with an average film thickness of 1.5 $\mu$m-TiN with an average film thickness of 0.2 $\mu$m (outermost surface side) (average total film thickness: 11.2 μm) was coated by the CVD method. By using the coated cermet obtained by CVD coating, Machining tests 1 to 3 were carried out.

[Machining test 1]

Fracture resistance evaluation test
Sample shape: TNMG160408
Work piece material: S40C (Shape: substantially cylindrical shape in which four grooves are provided to cylinder)
Cutting speed: 160 m/min
Depth of cut: 2.0 mm
Feed rate: 0.25 mm/rev
Atmosphere: Wet cutting
Tested times: 3 times
Judgment criteria of tool life: Number of impact times until the tool is fractured is defined to be a tool life. When the tool is not fractured until the number of impact times reaches to 25000, the test is terminated at that time.

The results of Machining test 1 were shown in Table 4.
[Table 4]

| Sample No. | Machining test 1 (Number of impacts/times) | | |
|---|---|---|---|
| | 1 st | 2nd | 3rd |
| Present product 1 | 25000 or more | 25000 or more | 18693 |
| Present product 2 | 25000 or more | 25000 or more | 16946 |
| Present product 3 | 25000 or more | 25000 or more | 25000 or more |
| Present product 4 | 25000 or more | 20846 | 19709 |
| Present product 5 | 25000 or more | 25000 or more | 25000 or more |
| Present product 6 | 25000 or more | 25000 or more | 25000 or more |
| Present product 7 | 25000 or more | 17592 | 16322 |
| Present product 8 | 25000 or more | 21407 | 25000 or more |
| Comparative product 1 | 17934 | 15943 | 12836 |
| Comparative product 2 | 20027 | 15091 | 13788 |
| Comparative product 3 | 25000 or more | 25000 or more | 25000 or more |
| Comparative product 4 | 14901 | 10349 | 9639 |
| Comparative product 5 | 3597 | 74 | 2188 |

[Machining test 2]

Wear resistance evaluation test
Sample shape: TNMG160408
Work piece material: S40C (Shape: cylindrical)
Cutting speed: 200 m/min
Depth of cut: 2.0 mm
Feed rate: 0.25 mm/rev
Atmosphere: Wet cutting
Judgment criteria of tool life: When the tool is fractured, or a maximum flank wear width $V_{Bmax}$ became 0.3 mm or more, then, it is defined to be a tool life.

The results of Machining test 2 were shown in Table 5.

[Table 5]

| Sample No. | Machining test 2 | |
| --- | --- | --- |
| | Judgment criteria of tool life | Processed length |
| Present product 1 | Wear | 5.3 km |
| Present product 2 | Wear | 4.5 km |
| Present product 3 | Wear | 4.2 km |
| Present product 4 | Wear | 4.8 km |
| Present product 5 | Wear | 4.3 km |
| Present product 6 | Wear | 4.5 km |
| Present product 7 | Wear | 4.9 km |
| Present product 8 | Wear | 4.5 km |
| Comparative product 1 | Fracture | 2.4 km |
| Comparative product 2 | Fracture | 3.1 km |
| Comparative product 3 | Wear | 2.8 km |
| Comparative product 4 | Fracture | 2.2 km |
| Comparative product 5 | Fracture | 1.5 km |

[Machining test 3]

Wear resistance evaluation test
Sample shape: TNMG160408
Work piece material: SCM440 (Shape: cylindrical)
Cutting speed: 200 m/min
Depth of cut: 2.0 mm
Feed rate: 0.25 mm/rev
Atmosphere: Wet cutting
Judgment criteria of tool life: When the tool is fractured, or a maximum flank wear width $V_{Bmax}$ became 0.3 mm or more, then, it is defined to be a tool life.

The results of Machining test 3 were shown in Table 6.

[Table 6]

| Sample No. | Machining test 3 | |
| --- | --- | --- |
| | Judgment criteria of tool life | Processed length |
| Present product 1 | Wear | 4.8 km |
| Present product 2 | Wear | 4.0 km |
| Present product 3 | Wear | 3.8 km |
| Present product 4 | Wear | 4.3 km |
| Present product 5 | Wear | 3.9 km |

(continued)

| Sample No. | Machining test 3 | |
| --- | --- | --- |
| | Judgment criteria of tool life | Processed length |
| Present product 6 | Wear | 4.1 km |
| Present product 7 | Wear | 4.4 km |
| Present product 8 | Wear | 4.1 mm |
| Comparative product 1 | Fracture | 2.2 km |
| Comparative product 2 | Fracture | 2.8 km |
| Comparative product 3 | Wear | 2.4 km |
| Comparative product 4 | Fracture | 1.9 km |
| Comparative product 5 | Fracture | 1.1 km |

As shown in Table 5, Present products had processed lengths of 4.2 km or longer so that they were excellent in cutting properties than those of Comparative products. Comparative products had processed lengths of 3.1 km or less. Among these, Comparative product 3 contained large WC, so that thermal conductivity is high and generates no thermal crack. However, Comparative product 3 was easily reacted with the material to be cut and inferior in wear resistance whereby it had a short tool life.

Similarly in Table 6, Present products had processed length of 3.8 km or longer so that cutting properties were superior to those of Comparative products. Comparative products were 2.8 km or shorter.

The results of Machining tests 1 to 3 were scored. That is, with regard to impact times of Machining test 1, 25000 times or more was scored to 3 points, 20000 times or more and less than 25000 times was scored to 2 points, 15000 times or more and less than 20000 times was scored to 1 point, and less than 15000 times was scored to 0 point, and the results of 1st time to 3rd time was averaged. With regard to processed length in Machining test 2, 4.5 km or longer was scored to 3 points, 3.0 km or longer and less than 4.5 km was scored to 2 points, and 1.5 km or longer and less than 3.0 km was scored to 1 point, and with regard to processed length in Machining test 3, 4.0 km or longer was scored to 3 points, 2.5 km or longer and less than 4.0 km was scored to 2 points, 1.0 km or longer and less than 2.5 km was scored to 1 point, and less than 1.0 km was scored to 0 point. The average value of points in Machining test 1 and the points in Machining test 2 and Machining test 3 were added, and the value was the result of total evaluation. The larger points mean the more excellent cutting properties. The results of the obtained total evaluation were shown in Table 7.

[Table 7]

| Sample No. | Machining test 1 (point) | | | | Machini ng test 2 (point) | Machini ng test 3 (point) | Total evaluation (point) |
| --- | --- | --- | --- | --- | --- | --- | --- |
| | 1st | 2nd | 3rd | Average | Evaluation | Evaluation | Sum |
| Present product 1 | 3 | 3 | 1 | 2.3 | 3 | 3 | 8.3 |
| Present product 2 | 3 | 3 | 1 | 2.3 | 3 | 3 | 8.3 |
| Present product 3 | 3 | 3 | 3 | 3 | 2 | 2 | 7 |
| Present product 4 | 3 | 2 | 1 | 2 | 3 | 3 | 8 |
| Present product 5 | 3 | 3 | 3 | 3 | 2 | 2 | 7 |
| Present product 6 | 3 | 3 | 3 | 3 | 3 | 3 | 9 |
| Present product 7 | 3 | 1 | 1 | 1.7 | 3 | 3 | 7.7 |
| Present product 8 | 3 | 2 | 3 | 2.7 | 3 | 3 | 8.7 |
| Comparative product 1 | 1 | 1 | 0 | 0.7 | 1 | 1 | 2.7 |
| Comparative product 2 | 2 | 1 | 0 | 1 | 2 | 2 | 5 |

(continued)

| Sample No. | Machining test 1 (point) | | | | Machini ng test 2 (point) | Machini ng test 3 (point) | Total evaluation (point) |
|---|---|---|---|---|---|---|---|
| | 1st | 2nd | 3rd | Average | Evaluation | Evaluation | Sum |
| Comparative product 3 | 3 | 3 | 3 | 3 | 1 | 1 | 5 |
| Comparative product 4 | 0 | 0 | 0 | 0 | 1 | 1 | 2 |
| Comparative product 5 | 0 | 0 | 0 | 0 | 1 | 1 | 2 |

As shown in Table 7, the average values in Machining test 1 of Present products are 1.7 to 3 points, so that it can be understood that they are excellent in fracture resistance. The results of Machining test 2 and Machining test 3 of Present products are 2 to 3 points, so that it can be understood that they are excellent in wear resistance. Present products well balanced in fracture resistance and wear resistance had high points of 7 to 9 points in total evaluation. Comparative products had lower points in total evaluation than those of Present products. This means that the overall cutting properties thereof are inferior to those of Present products. For example, with regard to Comparative product 2, it shows excellent wear resistance since it is 2 points in Machining test 2 and Machining test 3, but an average value in Machining test 1 is 1 point, so that the total evaluation is 5 points. With regard to Comparative product 3, it shows excellent fracture resistance since it is 3 points in Machining test 1, but it is each 1 point in Machining test 2 and Machining test 3, so that the total evaluation is 5 points.

To the cermets of Present products 3 and 6 and the cermets of Comparative products 1 and 2 were applied grinding and honing, and they were machined to an ISO standard VNMG160408 shape. As shown in Table 8, a TiAIN film with an average film thickness of 2.5 $\mu$m was coated on the surface thereof by the PVD method, they were made Present products 9 and 10, and Comparative products 5 and 6, respectively. Machining test 4 was carried out by using these products.

[Table 8]

| Sample No. | Hard film | Substrate |
|---|---|---|
| Present product 9 | 2.5 $\mu$m TiAIN | Cermet of Present product 3 |
| Present product 10 | 2.5 $\mu$m TiAIN | Cermet of Present product 6 |
| Comparative product 6 | 2.5 $\mu$m TiAIN | Cermet of Comparative product 1 |
| Comparative product 7 | 2.5 $\mu$m TiAIN | Cermet of Comparative product 2 |

[Machining test 4]

Wear resistance evaluation test
Sample shape: VNMG160408
Work piece material: S40C (Shape: cylindrical shape)
Cutting speed: 140 m/min
Depth of cut: 2.0 mm
Feed rate: 0.25 mm/rev
Atmosphere: Dry cutting
Judgment criteria of tool life: When the tool is fractured by cutting 10 corners for 15 minutes at the maximum, or a maximum flank wear width $V_{Bmax}$ became 0.3 mm or more, then, it is defined to be a tool life.

The results of Machining test 4 were shown in Table 9.
[Table 9]

| Sample No. | Machining test 4 |
|---|---|
| | Number of corners which are fractured or the maximum flank wear width $V_{Bmax}$ became 0.3 mm or more |
| Present product 9 | 2 |
| Present product 10 | 0 |
| Comparative product 6 | 5 |
| Comparative product 7 | 4 |

From Table 9, it can be understood that Present products 9 and 10 are excellent in fracture resistance and wear resistance than those of Comparative products 6 and 7.

Example 2

As starting powders of the cermet, Ti $(C_{0.5}N_{0.5})$ powder having an average particle size of 1.4 $\mu$m, TaC powder having an average particle size of 1.5 $\mu$m, NbC powder having an average particle size of 1.5 $\mu$m, HfC powder having an average particle size of 1.6 $\mu$m, WC powder having an average particle size of 1.5 $\mu$m, $Cr_3C_2$ powder having an average particle size of 1.1 $\mu$m, and Co powder having an average particle size of 1.3 $\mu$m were prepared. By using these powders, they were weighed with the formulation compositions shown in Table 10.

[Table 10]

| Sample No. | Formulation composition (% by weight) |
|---|---|
| Present product 11 | 14.4%Ti$(C_{0.5}N_{0.5})$-71.0%WC-3.5%NbC-2.4%$Cr_3C_2$-0.6%HfC-8.1%Co |
| Present product 12 | 20.7%Ti$(C_{0.5}N_{0.5})$-60.4%WC-8.4%TaC-1.9%$Cr_3C_2$-8.6%Co |

The powder mixture was subjected to the same manner as in Example 1 to prepare a mixed powder and subjected to press molding. The press molded mixture was placed in a sintering furnace, gradually raised the temperature to 450°C in vacuum to evaporate the paraffin, and then, the temperature was raised in vacuum to First heating temperature of 1240°C with a temperature heating rate of 10 to 12°C/min. Further, the mixture was heated from First heating temperature of 1240°C to Second heating temperature of 1520°C with a temperature heating rate of 2.0°C/min in a nitrogen atmosphere with a pressure of 30 Torr. It was maintained at Second heating temperature of 1520°C for 30 minutes in a nitrogen atmosphere with a pressure of 30 Torr, further maintained at the same temperature for 30 minutes in a nitrogen atmosphere with a pressure of 20 Torr, and then, cooled from Second heating temperature of 1520°C to the normal temperature with a cooling rate of 10°C/min while gradually lowering the pressure of the nitrogen atmosphere.

Cross-section structures at the surface area and the inner area of the obtained cermets were observed by a scanning type electron microscope, and each composition of the binder phase, the first hard phase and the second hard phase were measured by using an EDS attached to the scanning type electron microscope. These results were shown in Table 11. Among the elements contained in the binder phase, the element which is 50% by weight or more based on the whole binder phase is made a main component, and the element which is less than 50% by weight based on the whole binder phase is made a minor component.

[Table 11]

| Sample No. | Composition of the respective phases at the surface area | | | Composition of respective phases at the inner area | | | |
|---|---|---|---|---|---|---|---|
| | Binder phase | | First hard phase | Binder phase | | First hard phase | Second hard phase |
| | Main component | Minor components | | Main component | Minor components | | |
| Present product 11 | Co | Ti,W,Cr | WC | Co | Ti,W Cr | WC | Single phase of Ti(C,N), single phase of (Ti,W,Nb, Cr,Hf)(C,N) core-rim phase of Ti (C,N) core-(Ti, W,-Nb,Cr, Hf)(C,N) rim |
| Present product 12 | Co | Ti,W,Cr | WC | Co | Ti,W,Cr | WC | Single phase of Ti(C,N), single phase of (Ti,W,Ta, Cr)(C,N), core-rim phase of Ti (C,N) core-(Ti, W,-Ta,Cr)(C, N) rim |

An average thickness of the surface area was measured from the cross-section structure of the cermet by using a scanning type electron microscope. From the photographs in which a cross-section structure at the surface area and the inner area of the cermet was photographed by using the scanning type electron microscope, an area ratio $S_b$ of the binder phase, an area ratio $S_1$ of the first hard phase, and an area ratio $S_2$ of the second hard phase at the surface area and the inner area were measured. Also, a $S_1/S_2$ ratio was obtained from $S_1$ and $S_2$. These values were shown in Table 12.

[Table 12]

| Sample No. | Surface area | | | Inner area | | | | $C_N/(C_{T-}0.0653 \cdot Cw)$ |
|---|---|---|---|---|---|---|---|---|
| | Thickness ($\mu$m) | $S_b$ (Area %) | $S_1$ (Area %) | $S_b$ (Area %) | $S_1$ (Area %) | $S_2$ (Area %) | $S_1/S_2$ | |
| Present product 11 | 20 | 13.1 | 86.9 | 11.8 | 46.1 | 42.1 | 1.10 | 0.72 |
| Present product 12 | 15 | 12.2 | 87.8 | 11.4 | 36.4 | 52.2 | 0.70 | 0.80 |

To the obtained cermets were applied grinding and honing, whereby they were machined to an ISO standard TNMG160408 shape. Further, they were coated with a hard film having a film constitution of (the substrate side) TiN with an average film thickness of 1.0 $\mu$m-Ti(C,N) with an average film thickness of 8.0 $\mu$m-Ti (C,N,O) with an average film thickness of 0.5 $\mu$m-Al$_2$O$_3$ with an average film thickness of 1.5 $\mu$m-TiN with an average film thickness of 0.2 $\mu$m (the uppermost surface side) (average total film thickness: 11.2 $\mu$m) by the CVD method. Machining test 5 was carried out by using the coated cermets of Present products 11 and 12 obtained by CVD coating and the coated cermets of Comparative products 3 and 4 in Example 1.

[Machining test 5]

Wear resistance evaluation test
Sample shape: TNMG160408
Work piece material: S40C (Shape: cylindrical)
Cutting speed: 200 m/min
Depth of cut: 2.0 mm
Feed rate: 0.25 mm/rev
Atmosphere: Wet cutting
Judgment criteria of tool life: When the tool is fractured, or a maximum flank wear width $V_{Bmax}$ became 0.3 mm or more, then, it is defined to be a tool life.

The results of Machining test 5 were shown in Table 13.
[Table 13]

| Sample No. | Machining test 5 | |
|---|---|---|
| | Judgment criteria of tool life | Processed length |
| Present product 11 | Wear | 5.7 km |
| Present product 12 | Wear | 5.2 km |
| Comparative product 3 | Wear | 3.0 km |
| Comparative product 4 | Fracture | 2.1 km |

From Table 13, it can be understood that Present products 11 and 12 have longer processed length as compared with those of Comparative products 3 and 4 so that they have longer tool life.

## Claims

1. A cermet which comprises a first hard phase comprising WC, a second hard phase comprising at least one selected from a carbide, nitride and carbonitride of an element(s) of groups 4, 5 and 6 of the Periodic Table including a titanium element, and a mutual solid solution thereof, and a binder phase mainly comprising an iron-group metal, wherein a carbon amount $C_T$ (% by weight) contained in a whole cermet, a tungsten amount $C_W$ (% by weight) contained in the whole cermet, and a nitrogen amount $C_N$ (% by weight) contained in the whole cermet satisfy

$$0.25 < (C_N/(C_T - 0.0653 \cdot C_W)) < 6,$$

the cermet is formed by a surface area having an average thickness of 5 to 100 $\mu$m and comprising the first hard phase and the binder phase, and an inner area existing at an inner area than the surface area and comprising the first hard phase, the second hard phase and the binder phase, and
a ratio of an area ratio of the first hard phase to an area ratio of the second hard phase at a cross-section structure of the inner area of the cermet is 0.15 to 4.

2. The cermet according to Claim 1, wherein an area ratio of the binder phase at the cross-section structure of the inner area of the cermet is 3 to 30 area %, a sum of an area ratio of the first hard phase and an area ratio of the second hard phase is 70 to 97 area %, and a sum of the above is 100 area %.

3. The cermet according to Claim 1 or 2, wherein an area ratio of the binder phase at the cross-section structure of the surface area of the cermet is 3 to 30 area %, an area ratio of the first hard phase is 70 to 97 area %, and a sum of the above is 100 area %.

4. The cermet according to any one of Claims 1 to 3, wherein a $Cr_3C_2$ amount is 0.1 to 10% by weight when a Cr element contained in whole cermet is converted into $Cr_3C_2$.

5. The cermet according to any one of Claims 1 to 4, wherein a VC amount is 0.1 to 5% by weight when a V element contained in whole cermet is converted into VC.

6. The cermet according to any one of Claims 1 to 5, wherein the second hard phase comprises at least one selected from Ti(C,N), (Ti,W)(C,N), (Ti,W,Ta)(C,N), (Ti,W,Nb)(C,N), (Ti,W,Ta,Nb)(C,N), (Ti,W,Nb,Mo,V)(C,N), (Ti,W,Cr,V)(C,N), (Ti,W,Nb,Cr,V)(C,N), (Ti,W,Ta,Nb,Cr,V)(C,N), (Ti,W,Nb,Cr,Zr)(C,N), (Ti,W,Cr)(C,N), (Ti,W,Nb,Cr,Hf)(C,N), (Ti,W,Ta,Cr)(C,N) and (Ti,W,Ta,Nb,Cr)(C,N).

7. The cermet according to any one of Claims 1 to 6, wherein the second hard phase is constituted by at least one selected from a single phase comprising at least one carbonitride selected from Ti(C,N), (Ti,W)(C,N), (Ti,W,Ta)(C, N), (Ti,W,Nb)(C,N), (Ti,W,Ta,Nb)(C,N), (Ti,W,Nb,Mo,V)(C,N), (Ti,W,Cr,V)(C,N), (Ti,W,Nb,Cr,V)(C,N), (Ti,W,Ta,Nb, Cr,V)(C,N), (Ti,W,Nb,Cr,Zr)(C,N), (Ti,W,Cr)(C,N), (Ti,W,Nb,Cr,Hf)-(C,N), (Ti,W,Ta,Cr)(C,N) and (Ti,W,Ta,Nb,Cr) (C,N), and,
a core-rim phase having a structure in which a core portion (core) comprising at least one carbonitride selected from Ti(C,N), (Ti,W)(C,N), (Ti,W,Ta)(C,N), (Ti,W,Nb)(C,N), (Ti,W,Ta,Nb)(C,N), (Ti,W,Nb,Mo,V)(C,N), (Ti,W,Cr,V)(C,N), (Ti,W,Nb,Cr,V)(C,N), (Ti,W,Ta,Nb,Cr,V)(C,N), (Ti,W,Nb,Cr,Zr)(C,N), (Ti,W,Cr)(C,N), (Ti,W,Nb,Cr,Hf)-(C,N), (Ti,W, Ta,Cr)(C,N) and (Ti,W,Ta,Nb,Cr)(C,N) is surrounded by a peripheral portion (rim) comprising a carbonitride which is different from the composition of the core portion (core) selected from (Ti,W)(C,N), (Ti,W,Ta)(C,N), (Ti,W,Nb)(C, N), (Ti,W,Ta,Nb)(C,N), (Ti,W,Nb,Mo,V)(C,N), (Ti,W,Cr,V)(C,N), (Ti,W,Nb,Cr,V)(C,N), (Ti,W,Ta,Nb,Cr,V)(C,N), (Ti; W,Nb,Cr,Zr)(C,N), (Ti,W,Cr)(C,N), (Ti,W,Nb,Cr,Hf)-(C,N), (Ti,W,Ta,Cr)(C,N) and (Ti,W,Ta,Nb,Cr)(C,N).

8. The cermet according to any one of Claims 1 to 7, wherein $C_T$, $C_W$ and $C_N$ satisfy

$$0.28<(C_N/C_C)<5$$

here, $C_C = C_T - 0.0653 \cdot C_W$.

9. The cermet according to any one of Claims 1 to 7, wherein $C_T$, $C_W$ and $C_N$ satisfy

$$0.3<(C_N/C_C)<4.6$$

here, $C_C = C_T - 0.0653 \cdot C_W$.

10. The cermet according to any one of Claims 1 to 9, wherein an area ratio of the binder phase at the cross-section structure of the inner area of the cermet is 4 to 25 area %, a sum of an area ratio of the first hard phase and an area ratio of the second hard phase is 75 to 96 area %, and a sum of the above is 100 area %.

11. The cermet according to any one of Claims 1 to 9, wherein an area ratio of the binder phase at the cross-section structure of the inner area of the cermet is 5 to 20 area %, a sum of an area ratio of the first hard phase and an area ratio of the second hard phase is 80 to 95 area %, and a sum of the above is 100 area %.

12. The cermet according to any one of Claims 1 to 11, wherein an area ratio of the binder phase at the cross-section structure of the surface area of the cermet is 4 to 25 area %, an area ratio of the first hard phase is 75 to 96 area %, and a sum of the above is 100 area %.

13. The cermet according to any one of Claims 1 to 11, wherein an area ratio of the binder phase at the cross-section structure of the surface area of the cermet is 5 to 20 area %, an area ratio of the first hard phase is 80 to 95 area %, and a sum of the above is 100 area %.

14. The cermet according to any one of Claims 1 to 13, wherein a ratio of an area % of the first hard phase to an area % of the second hard phase is 0.20 to 3.8.

**15.** The cermet according to any one of Claims 1 to 13, wherein a ratio of an area % of the first hard phase to an area % of the second hard phase is 0.25 to 3.5.

**16.** The cermet according to any one of Claims 1 to 15, wherein a $Cr_3C_2$ amount is 0.15 to 8% by weight when a Cr element contained in the whole cermet is converted into $Cr_3C_2$.

**17.** The cermet according to any one of Claims 1 to 16, wherein a VC amount is 0.2 to 4% by weight when a V element contained in the whole cermet is converted into VC.

**18.** The cermet according to any one of Claims 1 to 17, wherein it is prepared by subjecting a mixture in which TiCN powder, WC powder, powder(s) of a carbide, nitride and carbonitride of an element(s) of groups 4, 5 and 6 of the Periodic Table and mutual solid solution(s) thereof, and powder of an iron-group metal(s) are mixed with a predetermined formulation composition, to

(A) a step of raising the temperature in a non-oxidative atmosphere from normal temperature to First heating temperature of 1200 to 1400°C,
(B) a step of raising the temperature in a nitrogen atmosphere at a pressure of 10 Torr or higher from First heating temperature of 1200 to 1400°C to Second heating temperature of 1420 to 1600°C,
(C) a step of maintaining in a nitrogen atmosphere at a pressure of 10 Torr or higher at Second heating temperature of 1420 to 1600°C,
(D) a step of maintaining in a nitrogen atmosphere at a pressure lower than that of Step (C) at Second heating temperature of 1420 to 1600°C, and
(E) a step of cooling in a nitrogen atmosphere at a pressure lower than that of Step (D) from Second heating temperature of 1420 to 1600°C to a normal temperature.

**19.** A coated cermet comprising the cermet according to any one of Claims 1 to 18 on the surface of which is coated with a hard film.

**20.** The coated cermet according to Claim 19, wherein the hard film comprises at least one hard film selected from the group consisting of an oxide, carbide and nitride of an element(s) of Groups 4, 5 and 6 of the Periodic Table, Al and Si, a mutual solid solution(s) thereof, and a hard carbon film.

**21.** The coated cermet according to Claim 19 or 20, wherein the hard film comprises at least one hard film selected from the group consisting of TiN, TiC, TiCN, TiAlN, TiSiN, AlCrN, $Al_2O_3$, diamond and diamond-like carbon (DLC).

## INTERNATIONAL SEARCH REPORT

| International application No. |
| --- |
| PCT/JP2010/061122 |

A. CLASSIFICATION OF SUBJECT MATTER
*B23B27/14*(2006.01)i, *C22C1/05*(2006.01)i, *C22C29/08*(2006.01)i

According to International Patent Classification (IPC) or to both national classification and IPC

B. FIELDS SEARCHED

Minimum documentation searched (classification system followed by classification symbols)
B23B27/14, C22C1/05, C22C29/08, B23B51/00, B23C5/16, C22C29/04

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 7-316716 A (Sumitomo Electric Industries, Ltd.), 05 December 1995 (05.12.1995), paragraphs [0012] to [0031]; tables 1 to 2 & US 6057046 A & EP 822265 A2 & KR 10-0180522 B1 | 1-21 |
| Y | JP 2001-502249 A (Sandvik AB.), 20 February 2001 (20.02.2001), page 4, line 3 to page 8, line 1; fig. 1 & US 6299992 B1 & EP 0931171 A1 & WO 1998/016665 A1 | 1-21 |

☒ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 03 August, 2010 (03.08.10) | 17 August, 2010 (17.08.10) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2010/061122 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 62-193731 A  (Mitsubishi Metal Corp.),<br>25 August 1987 (25.08.1987),<br>page 3, lower right column, line 4 to page 7,<br>upper left column, line 5; table 1<br>(Family: none) | 4,16 |
| A | JP 2-15139 A  (Kyocera Corp.),<br>18 January 1990 (18.01.1990),<br>page 3, lower left column, line 19 to page 4,<br>upper right column, line 12; table 1<br>(Family: none) | 1-21 |

Form PCT/ISA/210 (continuation of second sheet) (July 2009)

**EP 2 450 136 A1**

**REFERENCES CITED IN THE DESCRIPTION**

**Patent documents cited in the description**

- JP 2628200 B

- JP 3152105 B